# EUROPÄISCHE PATENTANMELDUNG

(11) **EP 0 936 236 A2**
(43) Veröffentlichungstag der Anmeldung: **18.08.1999**
(21) Anmeldenummer: 98124385.0
(22) Anmeldetag: 21.12.1998
(51) Int. Cl.: C08G 59/58, C09D 5/03

(54) **Epoxidharz- und Hybridpulverbeschichtungszusammensetzungen**

(30) Priorität: 16.02.1998 DE 19806225
(71) Anmelder: HÜLS AKTIENGESELLSCHAFT, 45764 Marl (DE)
(72) Erfinder: Wenning, Andreas, Dr., 48301 Nottuln (DE); Weiss, Jörn Volker Dr., 45721 Haltern (DE)
(74) Vertreter: Olbricht, Gerhard Dr.

(57) **Zusammenfassung**

Die Erfindung betrifft Epoxidharz- und Hybrid-Pulverbeschichtungszusammensetzungen mit physikalischen Härtergemischen aus Salzen von Polycarbonsäuren und Aminen und Polycarbonsäuren.

## Beschreibung

Die Erfindung betrifft Epoxidharz- und Hybrid-Pulverbeschichtungszusammensetzungen.

In der DE-OS 23 24 696 wird ein Verfahren zur Herstellung von matten Überzügen beschrieben, indem man Epoxidharze mit Salzen aus aromatischen Polycarbonsäuren, speziell Pyromellitsäure und cyclischen Amidinen, härtet.

In der DE-OS 44 00 931 werden Salze der Pyromellitsäure und Guanidinen als Härter für matte Epoxid- und Hybridbeschichtungen beansprucht.

Die DE-OS 44 03 225 beschreibt Salze aus Pyromellitsäure und tertiären Aminen, die zur Herstellung von matten Epoxid- und Hybridbeschichtungen verwendet werden können.

Ferner ist bekannt, daß nur Salze aus cyclischen Amidinen mit Trimellit- bzw. Pyromellitsäure zur Herstellung von matten EP-Pulverbeschichtungen geeignet sind. Die entsprechenden Salze der Phthalsäure, Isophthalsäure sowie Terephthalsäure härten dagegen mit EP-Harzen zu glänzenden Filmen aus.

Bei dem o. g Stand der Technik ist es wesentlich, daß nicht die Einzelkomponenten, sondern deren Reaktionsprodukte, die Salze, zum Einsatz kommen. Da die Salze Pyromellitsäure enthalten, besitzen derartige Härter für qualitativ anspruchsvolle Epoxid- und Hybridbeschichtungen einen relativ hohen Preis. Ein weiterer Nachteil stellt die Vergilbung der Beschichtungen dar.

Es ist weiterhin bekannt, daß man durch gleichzeitige Verwendung der Einzelhärter - Aminkomponente und Polycarbonsäure - zwar zu Oberflächen gleichen Mattierungsgrades gelangt, wie dies bei Einsatz des aus denselben Einzelkomponenten bestehenden salzförmigen Matthärters der Fall ist. Da keine Salzherstellung erfolgen muß, sind diese Härter preiswerter. Allerdings müssen Oberflächenstrukturierung und mindere physikalische Eigenschaften der Beschichtungen wie auch schlechte Reproduzierbarkeit des Matteffekts in Kaufgenommen werden.

Derartige physikalische Gemische aus Aminkomponente und Polycarbonsäure sind z. B. in der EP-A 0 504 183 beschrieben.

Physikalische Gemische aus Salzen und Polycarbonsäuren werden erstmals in den DE-OSS 44 00 929 und DE 44 03 129 beschrieben. Die Salze sind Umsetzungsprodukte aus Phthalsäure, Isophthalsäure und Terephthalsäure mit Guanidinen oder Aminen. Als Polycarbonsäuren kommen Pyromellitsäure und/oder Trimellitsäure zum Einsatz. Nachteilig ist die Überbrennstabilität.

Zur Verbesserung der Vergilbungsresistenz beim Überbrennen glänzender wie auch matter EP-Pulverbeschichtungen auf Basis von Salzen aus cyclischen Amidinen mit aromatischen Polycarbonsäuren werden gemäß DE 196 30 450 als Härterkomponente Phosphorsäuresalze im Gemisch mit Polycarbonsäuren eingesetzt. Die gezielte Herstellung dieser komplexen Härter ist jedoch schwierig. Schwankungen in den Reaktonsbedingungen können zu differierendem Aufbau der Salzgemische und damit zu unterschiedlichen lacktechnischen Ergebnissen führen

Aufgabe der Erfindung war es deshalb, neue EP- und Hybrid-Pulverbeschichtungszusammensetzungen mit geeigneten Härtern mit verbesserter Ökonomie bei einfachem Herstellverfahren aufzufinden, die zudem für die Herstellung von halbglänzenden bis matten Beschichtungen mit hohem Qualitätsniveau geeignet sind.

Überraschenderweise konnte diese Aufgabe dadurch gelöst werden, daß man als Härterkomponente physikalische Gemische aus aliphatischen und/oder cycloaliphatischen und/oder araliphatischen und/oder aromatischen Polycarbonsäuren mit Salzen aus aliphatischen und/oder cycloaliphatischen und/oder araliphatischen und/oder aromatischen Polycarbonsäuren und Aminen einsetzte.

Gegenstand der vorliegenden Erfindung sind Epoxidharz- und Hybrid-Pulverbeschichtungszusammensetzungen, wobei sie als Härter ein physikalisches Gemisch, bestehend aus
a) Salzen von mindestens difunktionellen Polycarbonsäuren und Aminen, erhalten durch Reaktion von
   a1) aliphatischen, cycloaliphatischen, araliphatischen und aromatischen Polycarbonsäuren und deren Anhydride
   a2) mit mindestens einem der folgenden Amine 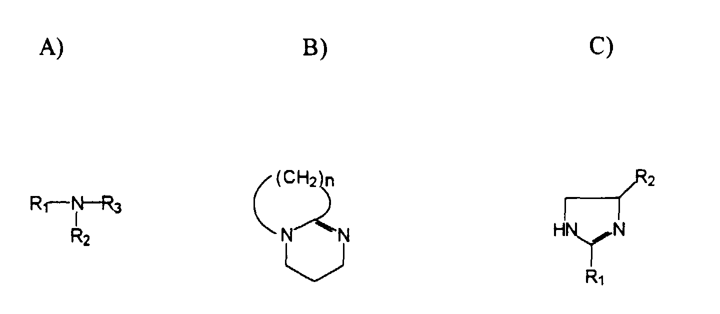 wobei R₁, R₂, R₃ gleiche oder verschiedene aliphatische, cycloaliphatische, araliphatische oder aromatische Kohlenwasserstoffreste mit 1 - 20 C-Atomen, wobei in der C-Kette eine oder mehrere CH₂-Gruppen durch O-Atome, NR₄-Gruppen mit R₄=C₁₋₆-Alkyl, CH-OH-Gruppen und/oder eine oder mehrere endständige Methylgruppen durch dialkylsubstituierte Aminogruppen mit 1 bis 6 Kohlenstoffatomen ersetzt sein können und R₁ und R₂ einen gemeinsamen Ring bilden können, in dem eine CH₂-Gruppe durch ein O-Atom oder durch eine NR₄-Gtuppe ersetzt sein kann und R₁ = R₂ = R₃ = -CH₂-CH₂- über ein gemeinsames N-Atom gebunden sein können, und n: 3 - 11 bedeuten
      und pro mol Polycarbonsäure a1) 0,5 - 3 mol Amin A) - C) zur Reaktion kommen, und/oder
   a3) mit Guanidinen der Formel D 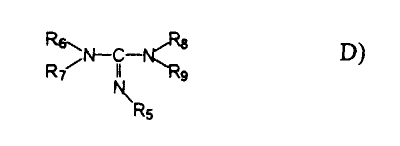 wobei R₅, R₆, R₇, R₈ und R₉ unabhängig voneinander gleiche oder verschiedene aliphatische, cycloaliphatische, araliphatische, aromatische Kohlenwasserstoffreste mit 1 - 9 C-Atomen und Wasserstoff bedeuten, und wobei R₆ und R₇ sowie R₈ und R₉ einen gemeinsamen Ring bilden können, der ein Sauerstoffatom als Heteroatom enthalten kann, und pro Mol Polycarbonsäure a1) 0,5 - 3 mol des Guanidins D) zur Reaktion kommen,
      und
   b) aliphatischen und/oder cycloaliphatischen und/oder araliphatischen und/oder aromatischen Polycarbonsäuren,
      im Verhältnis a) : b) von 99 : 1 bis 1 : 99 enthalten, wobei Isophthalsäure, Terephthalsäure und Phthalsäure als Polycarbonsäuren (a1) ausgeschlossen sind.

Die erfindungsgemäß einsetzbaren Salze a) enthalten aliphatische und/oder cycloaliphatische und/oder araliphatische und/oder aromatische Polycarbonsäuren sowie gegebenfalls deren Anhydride (Komponente a1). Als Beispiele seien Cyanursäure, 2,2,4 (2,4,4)-Trimethyladipinsäure, 1,2,3,4-Butantetracarbonsäure, Ethylendiamintetraessigsäure, Diethylentriaminpentaessigsäure, Nitrilotriessigsäure, Hexahydrophthalsäure, Hexahydroisophthalsäure, Hexahydroterephthalsäure, Pyromellitsäure, Trimellitsäure, Trimesinsäure, Cyclopentantetracarbonsäure, Zitronensäure, Aconitsäure und 2,6-Naphthalendicarbonsäure genannt. Bei Einsatz von Mischungen der Polycarbonsäuren sind beliebige Kombinationen möglich. Ausdrücklich ausgeschlossen werden Isophthalsäure, Terephthalsäure und Phthalsäure.

Die Salze der Polycarbonsäure enthalten als Aminkomponente a2) und/oder a3) Stickstoffverbindungen, die zur Salzbildung befähigt sind dargestellt, durch die Formeln A-D. Beispiele für konkrete Verbindungen der Formeln A)-C) sind N,N-Dimethylcyclohexylamin, N,N-Dimethylanilin, N-Methylmorpholin, N,N'-Dimethylpiperazin, 2,2,6,6-Tetramethyl-4-dimethylaminopiperidin, N,N-Dimethyloctadecylamin, 1,8-Diazabicyclo-[5.4.0]-undec-7-en, N,N,N',N'-Tetramethylhexamethylendiamin, 1,4-Diazabicyclo[2.2.2]octan, 2-Phenylimidazolin, 2-Methylimidazolin, 2,4-Dimethylimidazolin, 2-Ethyl-4-methylimidazolin. Beispiele für konkrete Verbindungen der Formel D) sind Tetramethylguanidin, Tetramethylcyclohexylguanidin, N,N',N''-Triphenylguanidin und N,N'-Dicyclohexyl-4-morpholincarbonamid. Der basische N-Gehalt der Salze beträgt 0.01 - 30 mmol/g und der Carboxylgruppengehalt 1 - 35 mmol/g.

Als einsetzbare Komponente b) sind aliphatische und/oder cycloaliphatische und/oder araliphatische und/oder aromatische Polycarbonsäuren geeignet. Als Beispiele seien Cyanursäure, 2,2,4 (2,4,4)-Trimethyladipinsäure, 1,2,3,4-Butantetracarbonsäure, Ethylendiamintetraessigsäure, Diethylentriaminpentaessigsäure, Nitrilotriessigsäure, Hexahydrophthalsäure, Hexahydroisophthalsäure, Hexahydroterephthalsäure, Pyromellitsäure, Trimellitsäure, Trimesinsäure, Cyclopentantetracarbonsäure, Zitronensäure und 2,6-Naphthalendicarbonsäure genannt. Ausdrücklich eingeschlossen sind Isophthalsäure, Terephthalsäure und Phthalsäure. Bei Einsatz von Mischungen der Polycarbonsäuren sind beliebige Kombinationen möglich.

Die erfindungsgemäßen Härter aus Komponente a) und b) werden in zwei Stufen hergestellt, wobei in der ersten Stufe die Salzbildung erfolgt, und nach beendeter Salzbildung das Lösemittel entfernt wird. In einem zweiten Schritt werden eine oder mehrere aliphatische, cycloaliphatische, araliphatische oder aromatische Polycarbonsäuren physikalisch zugemischt.

Die Salze a) sind teilweise bekannt. Sie sind auch nicht Gegenstand der Erfindung. Sie werden in bekannter Weise hergestellt, wobei zu der in Wasser oder Ethanol gelösten Polycarbonsäure in der Siedehitze die Amin-/Guanidinkomponente a2/a3 portionsweise zugegeben wird. Nach beendeter Zugabe wird noch ca. eine Stunde weitererhitzt. Anschließend wird das Lösemittel durch Destillation entfernt. Zur quantitativen Entfernung des Lösemittels wird das Reaktionsgemisch im Vakuumtrockenschrank bei 60 °C ca. 10 h getrocknet. Danach erfolgt das Zumischen der aliphatischen und/oder cycloaliphatischen und/oder araliphatischen und/oder aromatischen Polycarbonsäuren. Die Salze a) setzen sich aus 1 mol Polycarbonsäure und 0,5 - 3 mol der Verbindungen A-D zusammen. Die Zusammensetzung der erfindungsgemäßen Härtermischung a) und b) besteht aus 99 - 1 Massen-% Salz und 1 - 99 Massen-% Polycarbonsäure b).

Die erfindungsgemäße Härtermischung a) und b) wird mit Epoxidharzen oder Hybridharzen kombiniert. Hybride sind carboxylfunktionelle Polyesterharze, die mit Epoxidharzen gemischt sind.

Zur Herstellung der erfindungsgemäßen Beschichtungszusammensetzungen werden die Härter in Mengen von 2 - 14 Gew.-%, bezogen auf die Summe der Einsatzharze, eingesetzt. Die verwendeten Polyepoxidharze sind feste, harzartige Stoffe, die im Bereich 60 - 150 °C, vorzugsweise 70 - 110 °C, schmelzen und die im Durchschnitt mehr als eine 1,2-Epoxidgruppe pro Molekül enthalten. Im Prinzip kommen alle Verbindungen in Frage, die mehr als eine 1,2-Epoxidgruppe pro Molekül enthalten. Beispiele sind Polyepoxide wie Polyglycidylether von aromatischen oder aliphatischen Verbindungen, die mehrere Wasserstoffatome enthalten. Dazu zählen Resorcinol, Hydrochinon, Pyrocatechol, Bisphenol A, Bisphenol F, Glycerol, Pentaerythritol, Mannitol, Sorbitol und Trimethylolpropan. Bevorzugt werden allerdings handelsübliche EP-Harze, wie sie durch Umsetzung von Bisphenol A oder Bisphenol F mit Epichlorhydrin erhalten werden. Ganz besonders bevorzugt werden EP-Harze auf Basis der Reaktion zwischen Bisphenol A und Epichlorhydrin mit einem EP-Äquivalentgewicht zwischen 400 - 3 000, bevorzugt 800 - 1 000.

Bei den carboxylgruppenhaltigen Polymeren handelt es sich um Polyesterpolycarbonsäuren, die aus Polyolen und Polycarbonsäuren bzw. deren Derivaten hergestellt werden. Der Schmelzbereich dieser sauren Polyester liegt in einem Bereich von 60 - 160 °C, vorzugsweise 80 - 120 °C; ihre Saurezahl variiert von 10 - 150 mg KOH/g, vorzugsweise 30 - 60 mg KOH/g. Die OH-Zählen sollen unter 10 mg KOH/g liegen.

Für die Herstellung der zu verwendenden Polyesterpolycarbonsäuren werden Polycarbonsäuren, wie z. B. Oxal-, Adipin-, 2,2,4(2,4,4)-Trimethyladipin-, Azelain-, Sebacin, Decandicarbon-, Dodecandicarbon-, Fumar-, Phthal-, Isophthal-, Terephthal-, Tri- mellit-, Pyromellitsäure eingesetzt. Für die sauren Polyester werden als Polyolen beispielhaft folgende verwendet. Ethylenglykol, 1,2- und 1,3-Propandiol, 1,2-, 1,3-, 1,4- und 2,3-Butandiol, 1,5-Pentandiol, 3-Methyl-1,5-pentandiol, Neopentylglykol, 1,12-Dodecandiol, 2.2.4 (2.4.4)-Trimethyl-1,6-hexandiol, Trimethylolpropan, Glycerin, Pentaerythrit, 1,4-Bishydroxymethylcyclohexan, Cyclohexan-1,4-diol, Diethylenglykol, Triethylenglykol sowie Dipropylenglykol. Selbstverständlich können auch Hydroxylgruppen enthaltende Polyester, die nach bekannten Verfahren aus Polycarbonsäuren und Polyolen hergestellt werden, mit Polycarbonsäuren und/oder Polycarbonsäureanhydriden zu den Polyesterpolycarbonsäuren umgesetzt werden.

Im Falle der ausschließlichen Verwendung der handelsüblichen EP-Harze auf Bisphenol-A-Basis (+ Epichlorhydrin) beträgt die Härterkonzentration 2 - 14 Massen-%. Im Falle der Verwendung von Gemischen aus Epoxidharzen des Typs Diglycidylester des Bisphenol A und Carboxylgruppen enthaltender Polyester richtet sich das Mengenverhältnis nach der Säurezahl des Carboxylpolyesters. So wird z. B. üblicherweise bei einer Säurezähl von 30 - 50 mg KOH/g das Gewichtsverhältnis EP-Harz/Carboxylpolyester 60 : 40 bis 80 : 20, vorzugsweise 70 : 30, betragen. Die Konzentration des Härtergemisches a) + b) beträgt in diesen EP-Harz/Carboxylpolyester-Gemischen 2 - 14 Massen-%. Das Härterkomponenten werden vorzugsweise vor oder nach ihrer Vermischung auf eine mittlere Korngröße kleiner 100 µm, vorzugsweise kleiner 40 µm gemahlen. Zur Herstellung des Pulverlackes werden die Bindemittel zusammen mit dem Verlaufsmittel, Pigment und/oder Füllstoff und den UV- wie Oxidationsstabilisatoren zunächst gemischt und in einem Extruder bei ca. 100 °C homogenisiert. Die extrudierte Masse wird nach Abkühlung auf Raumtemperatur zu einem Pulverlack gemahlen, wobei die mittlere Teilchengröße ca. 30 - 100 µm, vorzugsweise 40 - 80 µm, betragen sollte.

Die erfindungsgemäßen Beschichtungszusammensetzungen eignen sich zur Herstellung von Beschichtungsmitteln, insbesondere für Pulverlacke mit halbglänzenden bis matten Oberflächen der Beschichtungen. Die Mengen der einzelnen Pulverlackbindemittelkomponenten können weitgehend variiert werden.

Das Auftragen von Pulverlacken auf der Basis der erfindungsgemäßen Beschichtungszusammensetzungen auf geeignete Substrate kann nach den bekannten Verfahren, wie z. B. durch elektrostatisches Pulversprühen, Wirbelsintern oder elektrostatisches Wirbelsintern erfolgen. Nach dem Auftragen des Pulverlackes nach einem der genannten Verfahren werden die beschichteten Substrate zur Aushärtung auf Temperaturen von 150 - 220 °C innerhalb von 30 - 8 min erhitzt. Die so hergestellten Lackfilme zeichnen sich durch sehr guten Verlauf, eine gute bis sehr gute Mechanik und eine matte Oberfläche aus, wobei der Glanzgrad in einem weiten Bereich beliebig einstellbar ist.

Die folgenden Beispiele sollen die Erfindung näher erläutern

### A Herstellung der im erfindungsgemäßen Verfahren eingesetzten Härtergemische

### Allgemeine Herstellungsvorschrift

Zu der Polycarbonsäure a1), die mit der 6- bis 10fachen Menge Ethanol bzw. Wasser bis zum Siedepunkt des Lösemittels erhitzt wird, wird das Amin (a2 und/oder a3) portionsweise zugegeben. Nach beendeter Aminzugabe wird noch ca. 1 h weitererhitzt. Danach erfolgt die Entfernung des Lösemittels, in der Regel durch Abdestillieren. Zur quantitativen Entfernung des Lösemittels wird das Reaktionsprodukt noch im Vakuumtrockenschrank bei ca. 60 °C nachbehandelt. Anschließend erfolgt die physikalische Mischung des Salzes a) mit der Polycarbonsäure b).

Die in der nachfolgenden Tabelle 1 aufgelisteten Härter wurden entsprechend der allgemeinen Herstellungsvorschrift hergestellt.

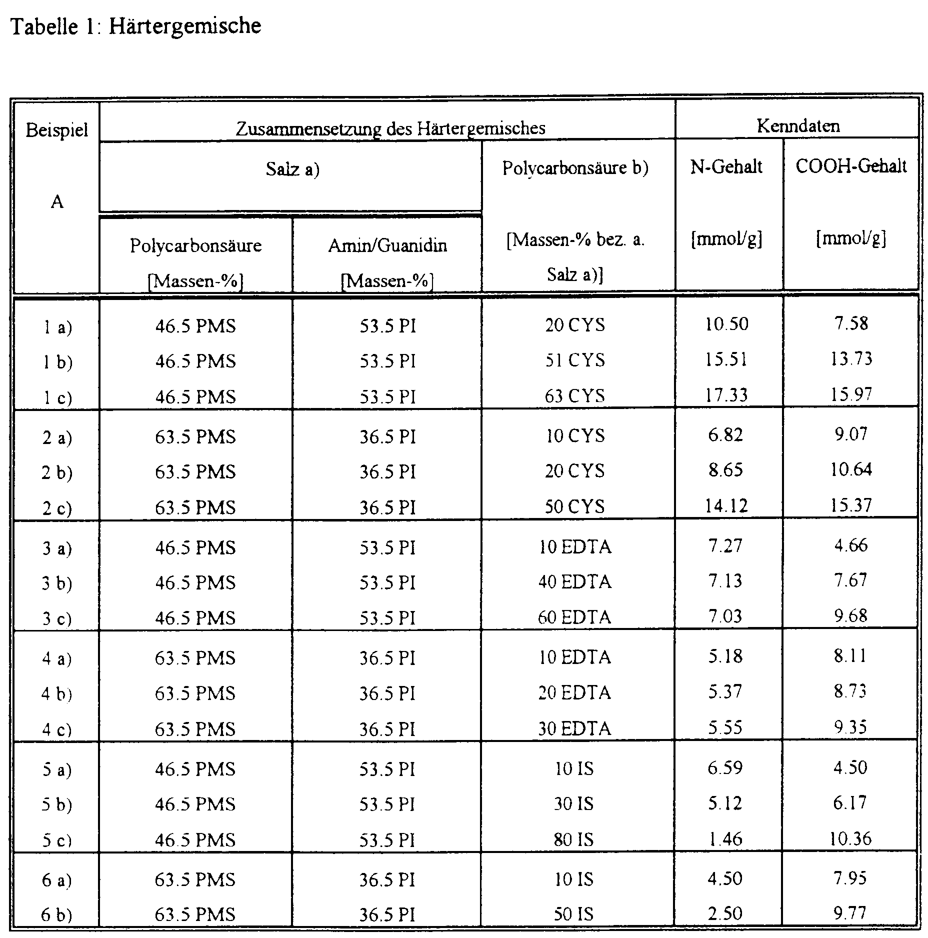

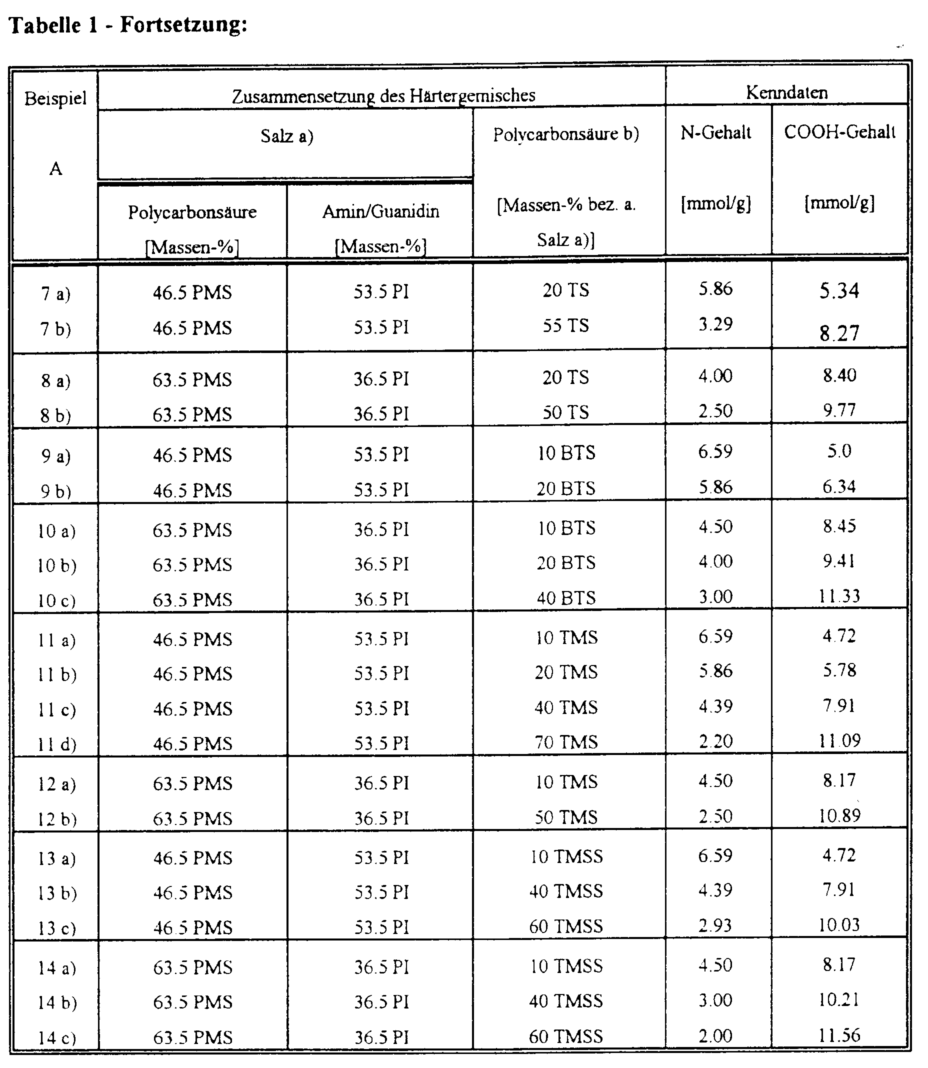

### Bitte ergänzen:

- BTS:: 1,2,3,4-Butantetracarbonsäure
- CYS:: Cyanursäure
- IS:: Isophthalsäure
- PI:: 2-Phenylimidazolin
- PMS:: Pyromellitsäure
- TMS:: Trimellitsäure
- TMSS:: Trimesinsäure
- TS:: Terephthalsäure
- EDTA:: Ethylendiamintetraessigsäure

### B Epoxidharz

Bisphenol-A war die Basis der in den Anwendungsbeispielen eingesetzten Epoixdharzverbindung. Sie ist durch folgende Kenndaten charakterisiert:

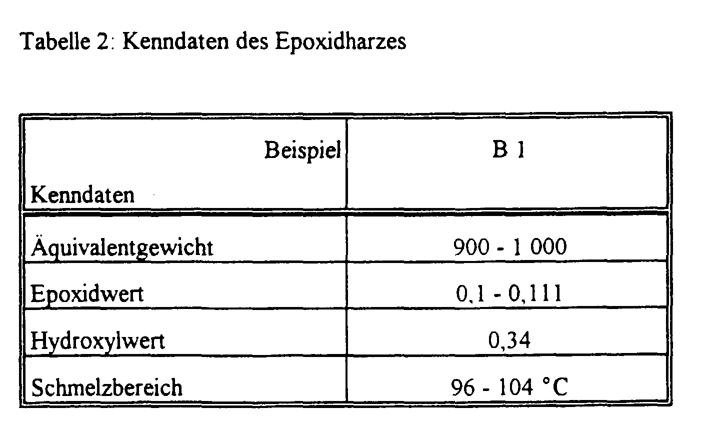

### C Epoxidharz-Pulverlackbeschichtungszusammensetzung

Zur Herstellung der erfindungsgemäßen Epoxidharz-Pulverbeschichtungszusammensetzungen wurden die gemahlenen Einsatzstoffe - Härter, Epoxidharz und Verlaufsmittel-Masterbatch (10 Massen-% Verlaufsmittel auf Basis von polymeren Butylacrylaten werden mit den Epoxidharzen in der Schmelze homogenisiert und nach dem Erstarren zerkleinert) - mit dem Weißpigment (TiO₂) in einem Kollergang innig vermischt und anschließend im Extruder bei 90 bis 110 °C homogenisiert. Nach dem Erkalten wurde das Extrudat gebrochen und in einer Stiftsmühle auf eine Korngröße < 100 µm gemahlen **(Lackbeispiele)**. Das wie oben beschriebene hergestellte Pulver wurde mit einer elektrostatischen Pulverspritzanlage bei 60 kV auf entfettete, gegebenenfalls vorbehandelte Stahlbleche appliziert und in einem Labor-Umlufttrockenschrank eingebrannt.

Die Abkürzungen in den folgenden Tabellen bedeuten:
- SD: = Schichtdicke in µm
- GS: = Gitterschnittprüfung (DIN 53 151)
- GG 60°∢: = Glanz n. Gardner (ASTM-D 5233)
- EI: = Tiefung nach Erichsen in mm (DIN 53 156)
- KS dir.: = Kugelschlag direkt in inch*lb
- YI: = Yellowness-Index

Die Berechnung der Lackformulierungen erfolgte nach folgendem Schema:
Massen-% EP = Epoxid
- B - V = EP: B = Massen-% Bindemittel
V = Massen-% Vernetzer
- B = 100 - Z: Z = Massen-% Zuschlagsstoffe
[40 Massen-% Weißpigment (TiO₂), 0,5 Massen-% Verlaufsmittel]

**Tabelle 3**

| Lackbeispiele | | | | | | | | |
|---|---|---|---|---|---|---|---|---|
| | | | Mechanische Kenndaten | | | | | |
| Beispiel C | Vernetzer gemäß in [Massen-%] | Härtung [°C/min] | SD | GS | GG 60°∢ | ET | Ks dir. | YI |
| 1 | 3,5 A 1 a) | 200/12 | 48 - 57 | 0 | 18 - 19 | 8,0 - 9,5 | > 80 | 7,2 |
| 2 | 3,5 A 1 b) | 200/12 | 60 - 76 | 0 | 19 - 20 | 9,0 | 50 | 8,0 |
| 3 | 3,5 A 1 c) | 200/12 | 75 - 85 | 0 | 24 - 26 | 9,5 | 50 | 9,1 |
| 4 | 5,0 A 2 a) | 200/15 | 69 - 71 | 1 | 9 | 7,0 | > 80 | 13,8 |
| 5 | 5,0 A 2 b) | 200/15 | 89 - 104 | 0 | 12 - 13 | 7,0 | > 80 | 13,2 |
| 6 | 5,0 A 2 c) | 200/15 | 64 - 82 | 0 | 25 -26 | 8,5 - 9,5 | > 80 | 8,9 |
| 7 | 3,5 A 3 a) | 200/15 | 76 - 89 | 1 | 15 - 16 | 7,5 - 9,5 | > 80 | 18,4 |
| 8 | 3,5 A 3 b) | 200/15 | 61 - 78 | 1 | 10 | 6,5 - 8,0 | 40 | 17,2 |
| 9 | 5,0 A 4 a) | 200/15 | 84 - 99 | 0 - 1 | 6 - 7 | 7,0 | > 80 | 17,9 |
| 10 | 5,0 A 4 b) | 200/15 | 48 - 61 | 1 - 2 | 7 - 8 | 7,5 | > 80 | 15,2 |
| 11 | 5,0 A 4 c) | 200/15 | 53 - 72 | 1 | 7 - 8 | 7,0 | > 80 | 17,1 |
| 12 | 3,5 A 5 a) | 200/15 | 67 - 92 | 1 | 17 - 18 | 9,0 | > 80 | 17,4 |
| 13 | 3,5 A 5 b) | 200/15 | 57 - 72 | 0 | 19 | 8,5 - 9,0 | 60 | 14,8 |
| 14 | 3,5 A 5 c) | 200/25 | 63 - 77 | 0 | 31 - 32 | 8,5 | 60 | 13,2 |
| 15 | 5,0 A 6 a) | 200/15 | 59 - 72 | 0 | 5 | 8,0 | > 80 | 15,1 |
| 16 | 5,0 A 6 b) | 200/15 | 77 - 103 | 1 | 25 - 26 | 9,0 | > 80 | 13,0 |
| 17 | 3,5 A 7 a) | 200/15 | 76 - 85 | 1 | 19 | 8,0 - 8,5 | > 80 | 12,8 |
| 18 | 3,5 A 7 b) | 200/25 | 75 - 91 | 0 - 1 | 16 - 17 | 9,0 | 60 | 12,7 |
| 19 | 5,0 A 8 a) | 200/15 | 40 - 55 | 1 | 8 | 8,0 - 8,5 | > 80 | 11,6 |
| 20 | 5,0 A 8 b) | 200/15 | 50 - 62 | 1 | 31 - 34 | 9,0 | > 80 | 11,0 |
| 21 | 3,5 A 9 a) | 200/15 | 76 - 90 | 0 | 14 | 8,0 | 60 | 18,0 |
| 22 | 3,5 A 9 b) | 200/15 | 82 - 92 | 0 - 1 | 12 - 13 | 6,5 - 7,0 | 60 | 18,4 |
| 23 | 5,0 A 10 a) | 200/15 | 57 - 64 | 0 - 1 | 6 - 7 | 7,5 - 8,5 | > 80 | 13,6 |
| 24 | 5,0 A 10 b) | 200/15 | 78 - 82 | 1 | 7 - 9 | 6,5 - 7,0 | > 80 | 16,2 |
| 25 | 5,0 A 10 c) | 200/15 | 36 - 50 | 1 | 12 - 15 | 7,5 - 8,0 | > 80 | 13,1 |
| 26 | 3,5 A 11 a) | 200/15 | 47 - 62 | 0 | 16 - 17 | 8,0 - 8,5 | > 80 | 13,9 |
| 27 | 3,5 A 11 b) | 200/15 | 67 - 80 | 1 | 14 - 15 | 6,0 | > 80 | 14,7 |
| 28 | 3,5 A 11 c) | 200/15 | 77-88 | 0 | 20 | 7,5 | 60 | 10,6 |
| 29 | 5,0 A 12 a) | 200/15 | 44 - 58 | 1 | 6 | 8,0 | > 80 | 12,5 |
| 30 | 5,0 A 12 b) | 200/15 | 48 - 68 | 1 | 30 - 31 | 8,5 - 9,0 | > 80 | 10,1 |
| 31 | 3,5 A 13 a) | 200/15 | 58 - 81 | 0 - 1 | 17 | 8,0 - 8,5 | 80 | 16,3 |
| 32 | 3,5 A 13 c) | 200/25 | 72 - 92 | 1 | 11 | 4,0 - 7,0 | 40 | 15,0 |
| 33 | 5,0 A 14 a) | 200/15 | 77 - 91 | 0 | 5 | 7,0 - 7,5 | > 80 | 14,5 |
| 34 | 5,0 A 14 b) | 200/25 | 90 - 105 | 0 - 1 | 8 | 6,0 | > 80 | 13,1 |

### D Carboxylgruppenhaltiger Polyester

Zur Herstellung einer Hybrid-Pulverbeschichtungszusammensetzung wurden die nachfolgend beschriebenen carboxylgruppenhaltigen Polyester mit folgenden Kenndaten eingesetzt:

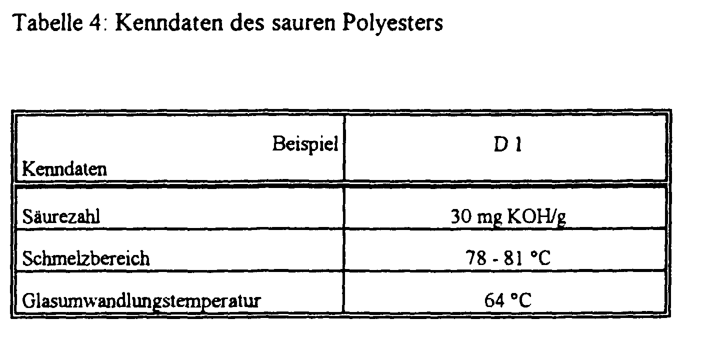

### E Hybrid-Pulverlackbeispiele

Die Aufarbeitung der Rohstoffe sowie die Herstellung und Applikation erfolgt analog C. Die Hybrid-Pulverlacke enthalten Epoxidharz und Polyesterpolycarbonsäuren im Verhältnis von 75 : 25, 40 Massen-% Weißpigment ( TiO₂) und 1 Massen-% Verlaufsmittel.

**Tabelle 5**

| Lackbeispiele | | | | | | |
|---|---|---|---|---|---|---|
| | | | Mechanische Kenndaten | | | |
| Beispiel E | Vernetzer gemäß [Massen-%] | Härtung [°C/min] | SD | GG 60°∢ | ET | Ks dir. |
| 1 | 5,0 A 2 b) | 200/15 | 60 - 74 | 16 | 7,0-7,5 | > 80 |
| 2 | 3,5 A 3 a) | 200/15 | 55 - 80 | 13 | 8,5 - 9,5 | > 80 |
| 3 | 3,5 A 3 b) | 200/15 | 59 - 75 | 12 | 6,5 - 7,0 | 40 |
| 4 | 3,5 A 3 c) | 200/15 | 44 - 65 | 12 | 3,5 - 5,5 | 30 |
| 5 | 5,0 A 4 a) | 200/15 | 44 - 64 | 9 | 7,0 - 7,5 | > 80 |
| 6 | 5,0 A 4 b) | 200/15 | 49 - 59 | 9 | 6,0 | > 80 |
| 7 | 5,0 A 6 a) | 200/15 | 55 - 68 | 10 | 8,0 - 8,5 | > 80 |
| 8 | 5,0 A 8 a) | 200/15 | 61 - 72 | 16 | 7,5 - 8,0 | > 80 |
| 9 | 3,5 A 11 a) | 200/15 | 56 - 66 | 16 | 9,0 | 70 |
| 10 | 3,5 A 11 b) | 200/15 | 55 - 69 | 18 | 9,5 | 70 |
| 11 | 3,5 A 11 c) | 200/15 | 57 - 80 | 19 | 9,5 | 80 |
| 12 | 3,5 A 13 a) | 200/15 | 60 - 73 | 15 | 9,0 - 9,5 | > 80 |
| 13 | 3,5 A 13 b) | 200/15 | 59 - 74 | 15 | 9,0 | > 80 |
| 14 | 3,5 A 13 c) | 200/15 | 51 - 70 | 16 | 9,0 - 9,5 | 70 |

## Patentansprüche

1. Epoxidharz- und Hybrid-Pulverbeschichtungszusammensetzung,
dadurch gekennzeichnet,
daß sie als Härter ein physikalisches Gemisch, bestehend aus
a) Salzen von mindestens difunktionellen Polycarbonsäuren und Aminen, erhalten durch Reaktion von
a1) aliphatischen, cycloaliphatischen, araliphatischen und aromatischen Polycarbonsäuren und deren Anhydride
a2) mit mindestens einem der folgenden Amine 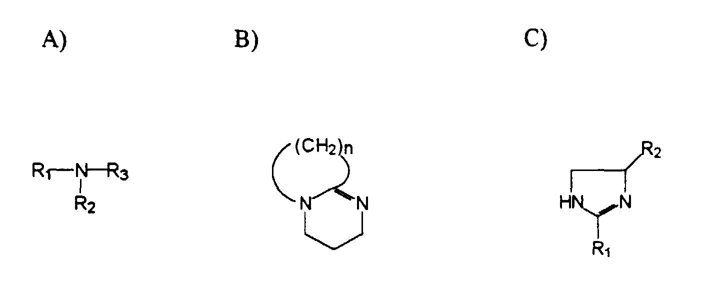 wobei R₁, R₂, R₃ gleiche oder verschiedene aliphatische, cycloaliphatische, araliphatische oder aromatische Kohlenwasserstoffreste mit 1 - 20 C-Atomen, wobei in der C-Kette eine oder mehrere CH₂-Gruppen durch O-Atome, NR₄-Gruppen mit R₄=C₁₋₆-Alkyl, CH-OH-Gruppen und/oder eine oder mehrere endständige Methylgruppen durch dialkylsubstituierte Aminogruppen mit 1 bis 6 Kohlenstoffatomen ersetzt sein können und R₁ und R₂ einen gemeinsamen Ring bilden können, in dem eine CH₂-Gruppe durch ein O-Atom oder durch eine NR₄-Gruppe ersetzt sein kann und R₁ = R₂ = R₃ = -CH₂-CH₂- über ein gemeinsames N-Atom gebunden sein können, und n: 3 - 11 bedeuten und pro mol Polycarbonsäure a1) 0,5 - 3 mol Amin A) - C) zur Reaktion kommen, und/oder
a3) mit Guanidinen der Formel D 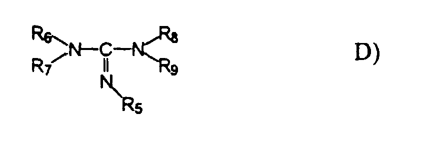 wobei R₅, R₆, R₇, R₈ und R₉ unabhängig voneinander gleiche oder verschiedene aliphatische, cycloaliphatische, araliphatische, aromatische Kohlenwasserstoffreste mit 1 - 9 C-Atomen und Wasserstoff bedeuten, und wobei R₆ und R₇ sowie R₈ und R₉ einen gemeinsamen Ring bilden können, der ein Sauerstoffatom als Heteroatom enthalten kann, und pro Mol Polycarbonsäure a1) 0,5 - 3 mol des Guanidins D) zur Reaktion kommen, und
b) aliphatischen und/oder cycloaliphatischen und/oder araliphatischen und/oder aromatischen Polycarbonsäuren,
im Verhältnis a) : b) von 99 : 1 bis 1 : 99 enthalten, wobei Isophthalsäure, Terephthalsäure und Phthalsäure als Polycarbonsäuren (a1) ausgeschlossen sind.

2. Pulverbeschichtungszusammensetzung nach Anspruch 1,
dadurch gekennzeichnet,
daß als Polycarbonsäuren a1) Cyanursäure, 2,2,4 (2,4,4)-Trimethyladipinsäure, 1,2,3,4-Butantetracarbonsäure, Ethylendiamintetraessigsäure, Diethylentriaminpentaessigsäure, Nitrilotriessigsäure, Hexahydrophthalsäure, Hexahydroisophthalsäure, Hexahydroterephthalsäure, Pyromellitsäure, Trimellitsäure, Trimesinsäure, Cyclopentantetracarbonsäure, Zitronensäure, Aconitsäure und 2,6-Naphthalendicarbonsäure eingesetzt werden.

3. Pulverbeschichtungszusammensetzung nach mindestens einem der Ansprüche 1-2,
dadurch gekennzeichnet,
daß als Amine a2) N,N-Dimethylcyclohexylamin, N,N-Dimethylanilin, N-Methylmorpholin, N,N'-Dimethylpiperazin, 2,2,6,6-Tetramethyl-4-dimethylaminopiperidin, N,N-Dimethyloctadecylamin, 1,8-Diazabicyclo-[5.4.0]-undec-7-en, N,N,N',N'-Tetramethylhexamethylendiamin, 1,4-Diazabicyclo[2.2.2]octan, 2-Phenylimidazolin, 2-Methylimidcolin, 2,4-Dimethylimidazolin, 2-Ethyl-4-methylimidazolin, Tetramethylguanidin, Tetramethylcyclohexylguanidin, N,N',N''-Triphenylguanidin und N,N'-Dicyclohexyl-4-morpholincarbonamid eingesetzt werden.

4. Pulverbeschichtungszusammensetzung nach mindestens einem der Ansprüche 1-3,
dadurch gekennzeichnet,
daß als Polycarbonsäuren b) Cyanursäure, 2,2,4 (2,4,4)-Trimethyladipinsäure, 1,2,3,4-Butantetracarbonsäure, Ethylendiamintetraessigsäure, Diethylentriaminpentaessigsäure, Nitrilotriessigsäure, Isophthalsäure, Terephthalsäure, Phthalsäure, Hexahydrophthalsäure, Hexahydroisophthalsäure, Hexahydroterephthalsäure, Pyromellitsäure, Trimellltsäure, Trimesinsäure, Cyclopentantetracarbonsäure, Zitronensäure, Aconitsäure und 2,6-Naphthalendicarbonsäure eingesetzt werden.

5. Pulverbeschichtungszusammensetzung nach mindestens einem der Ansprüche 1-4,
dadurch gekennzeichnet,
daß der Härter in Mengen von 2 - 14 Gew.-%, bezogen auf die Summe der eingesetzten Harze, enthalten ist.

6. Pulverbeschichtungszusammensetzung nach mindestens einem der Ansprüche 1-5,
dadurch gekennzeichnet,
daß die Epoxidharze einen Schmelzpunkt von 60 - 150 °C aufweisen und im Durchschnitt mehr als eine 1,2-Epoxidgruppe pro Molekül enthalten.

7. Pulverbeschichtungszusammensetzung nach mindestens einem der Ansprüche 1-6,
dadurch gekennzeichnet,
daß die verwendeten Epoxidharze auf der Reaktion zwischen Bisphenol A und Epichlorhydrin basieren und ein Epoxid-Äquivalentgewicht zwischen 400 - 3 000, aufweisen.

8. Pulverbeschichtungszusammensetzung nach mindestens einem der Ansprüche 1-7,
dadurch gekennzeichnet,
daß die eingesetzten Polyesterpolycarbonsäuren für die Hybridpulverbeschichtungszusammensetzungen einen Schmelzpunkt von 60 - 160 °C, eine Säurezahl von 10-150 mg KOH/g und eine OH-Zahl unter 10 mg KOH/g aufweisen.

9. Pulverbeschichtungszusammensetzung nach mindestens einem der Ansprüche 1-8, dadurch gekennzeichnet,
daß sie Hilfs- und/oder Zusatzstoffe enthalten.

10. Verwendung der Pulverbeschichtungszusammensetzung nach mindestens einem der Ansprüche 1-9, Zur Herstellung von halbglänzenden bis matten Beschichtungen.
